# EUROPEAN PATENT APPLICATION

(11) **EP 1 674 229 A2**
(43) Date of publication of application: **28.06.2006**
(21) Application number: 05254413.7
(22) Date of filing: 14.07.2005
(51) Int. Cl.: B29B 13/02

(54) **Method and apparatus for preheating sheets**

(30) Priority: 23.12.2004 AU 2004242478
(71) Applicant: Delphi Technologies, Inc., Troy, MI 48007 (US)
(72) Inventor: Terzic, Edin, Rowville, VIC 3178 (AU); Fevzi, Erkut, Gladstone Park, VIC 3062 (AU)
(74) Representative: Jones, Keith William

(57) **Abstract**

An oven 10 for preheating plastic sheet material 20 prior to moulding, the oven 10 including at least two separate heating chambers 11 - 14 which each include a drawer 15 having supporting means 14 for supporting a sheet 20 and being movable into and out of the chamber 11 - 14. Each chamber is associated with heating means 30 for heating a sheet 20 within the chamber 11 - 14. Each drawer 15 being movable into and out of a chamber 11 - 14 for loading and unloading a sheet 20 and the chamber 11 - 14 being closed for heating a sheet 20 wherein the temperature within one of the chambers 11 - 14 which is closed is substantially unaffected when another of the chambers 11 - 14 is opened.

## Description

The present invention relates to a method and apparatus for preheating plastic sheets. The present invention has been developed for manufacture of plastic products for the automotive industry and it will be convenient to describe the invention in relation to that application. It will be appreciated however, that the invention can have application in many other fields separate from the automotive field and the invention therefore is not restricted to automotive applications.

Plastic moulded products have been used extensively in the automotive industry as typically they have lower weight than other materials, they can be more easily produced by moulding and often their overall cost is less. As manufacturing techniques for plastic materials become more sophisticated, more and more automotive parts that traditionally have been made of non-plastic materials, usually metals, are being moulded from plastic. These include parts that are large in size, for example fuel tanks.

Because of the size of a fuel tank, thermoforming has generally been employed. To increase the speed of thermoforming the plastic sheet to be moulded can be preheated prior to introduction into the moulding dies. A preheating oven can be employed for that purpose and in one form of oven, the oven can accommodate a large vertical stack of sheets stacked one on top of the other. One of the problems associated with this form of oven, is that the sheet temperature can vary significantly between different positions in the stack, such as between the centre of the stack and the periphery. Thus, it is not readily possible to provide sheets which have a generally consistent temperature from one side to the other, to the thermoforming machinery. The thermoformed product therefore can have undesirable differences in wall thickness, due to higher temperature sections of the sheet being more highly flowable than lower temperature sections. Differences in the sheet temperature can be eliminated by heating the sheet within the thermoforming machinery, however that slows the moulding process, thereby at least partly defeating the benefits of preheating and reducing moulding efficiency.

In a different form of oven, a small number of sheets is accommodated such as 4, 6 or 8 sheets. In this form of oven, the sheets are more consistently heated than in the form of oven described above, but because the oven door is opened each time a sheet is to be taken from the oven, the oven temperature can change and thereby affect the temperature of the sheets remaining within the oven. Accordingly, a generally consistent sheet temperature is again not necessarily achieved, so that the thermoformed products being produced may vary in wall thickness, or it may be necessary for the sheets to be heated within the thermoforming machinery, thereby detracting from moulding efficiency as described above.

It is an object of the invention to overcome or at least alleviate one or more drawbacks associated with the prior art.

According to the present invention there is provided an oven for preheating plastic sheet material prior to moulding, said oven including at least two separate heating chambers, each chamber including a drawer having supporting means for supporting a sheet and being movable into and out of said chamber, each chamber being associated with heating means for heating a sheet within the chamber, said drawer being movable into and out of said chamber for loading and unloading a sheet and said chamber being closed for heating a sheet and wherein the temperature within one of said chambers which is closed is substantially unaffected when the other of said chambers is opened.

The present invention further provides a method of preheating plastic sheet material in an oven which includes at least two separate heating chambers, each chamber including a drawer having supporting means for supporting a sheet and being movable into and out of said chamber, each chamber being associated with heating means for heating a sheet within the chamber, said drawer being movable into and out of said chamber for loading and unloading a sheet and said chamber being closed for heating a sheet and wherein the temperature within one of said chambers which is closed is substantially unaffected when the other of said chambers is opened, said method including the steps of:
(i) moving the drawer of a first of said heating chambers out of said first heating chamber;
(ii) placing a first sheet for support by said first drawer;
(iii) returning said first drawer into said first heating chamber and closing said first heating chamber;
(iv) heating said first sheet to a desired temperature;
(v) moving said first drawer out of said first heating chamber and removing said heated sheet from said first drawer;
(vi) moving the drawer of a second of said heating chambers out of said second heating chamber;
(vii) placing a second sheet for support by said second drawer;
(viii) returning said second drawer into said second heating chamber and closing said second heating chamber;
(ix) heating said second sheet to a desired temperature;
(x) moving said second drawer out of said second heating chamber and removing said heated sheet from said second drawer.

Advantageously, the present invention permits a single sheet to be heated and removed from the oven independently of other sheets being heated within the oven, because the chambers of the oven are separate. This differs from the prior art in which more than a single sheet is heated in one oven chamber. Thus, according to the invention, removal of a sheet from the oven, or reloading a sheet within the oven, has no effect on other sheets remaining within the oven.

An oven according to the invention can include two chambers and in that arrangement, a sheet could be loaded into one chamber while a sheet already loaded in another chamber is being heated. In the preferred arrangement, the oven includes more than two chambers and in one arrangement, four chambers are provided. An oven having more than two chambers is more appropriate for sheet material which requires a period of preheating in excess of the cycle time of a thermoforming operation. That is, if the time taken to preheat a sheet is greater than the moulding machinery cycle time, so that the moulding machinery is idle while it awaits a sheet to be preheated, then a greater number of chambers is preferred to ensure that a preheated sheet is always readily available for loading into the moulding machinery. It may alternatively be desirable to include more than two chambers, if the oven is required to supply preheated sheets for more than one moulding machine.

Each chamber of an oven according to the invention is separated from each other chamber so that the opening of one chamber does not affect conditions within another chamber. Thus, the respective chambers are isolated from each other and do not communicate with each other, regardless of the condition of respective chambers being open or closed. Each chamber defines an interior space for receipt of a sheet, which in the closed condition of the chamber, is completely enclosed.

The drawer of each chamber may contribute to closing the chamber by providing one or more walls or part of a wall which define the interior space. In one arrangement, the chamber defines an interior space which is generally rectangular in cross-section, having upper and lower walls which are spaced apart and generally parallel, and a pair of spaced apart and generally parallel side walls which extend between the upper and lower walls. An end wall which is perpendicular to each of the upper and lower walls and the side walls, closes a rear end of the interior space. In this arrangement, the drawer of the chamber can include a front wall, so that movement of the drawer into the chamber brings the front wall into a position to close the chamber. A suitable sealing arrangement can be employed between the front wall and other parts of the chamber so that the chamber can be properly closed.

Alternatively, the drawer may move into and out of the chamber through an opening in a chamber wall, which is closed when the drawer is within the chamber for heating of a sheet. In this arrangement, the chamber may include a front wall which can be shifted to a position for movement of the drawer out of the chamber. The front wall may shift by pivoting or sliding.

Other arrangements may alternatively be provided to facilitate closing of a chamber for preheating a sheet and for enabling movement of a draw into and out of a chamber.

Movement of a drawer into and out of a chamber preferably is facilitated by way of rollers mounted either to the drawer or to the chamber. Preferably rollers are provided to support each drawer along at least opposite edges thereof which extend in the direction that the drawer travels into and out of the chamber. As will become apparent hereinafter, movement of the drawer preferably is controlled automatically, and can include use of an electric motor drive, or a hydraulic or pneumatic drive.

The supporting means of each drawer preferably elevates the sheet to be preheated, to a position that enables heat to be directed to each of the broad faces of the sheet, i.e. the upper and lower or underneath surfaces. This facilitates better and faster preheating, by heating the sheet from either side. It is however within the scope of the invention that the supporting means includes a flat surface, on which a sheet is supported, so that only the upper surface of the sheet is exposed for heating, but this may slow the preheating process and may cause an undesirable temperature differential between the upper and lower surfaces of the sheet.

The preferred form of supporting means includes a plurality of roller supports which elevate the sheet as described above for direct heating of both of the upper and lower surfaces of the sheet and the rollers on which the sheet rests or is supported, allow shifting movement of the sheet over the rollers for locating purposes. Location of the sheet is described later herein. The roller supports can include an upstanding support post which supports an axle about which a roller is rotatable.

The supporting means could alternatively comprise upstanding posts with one end arranged for engagement with the lower or underneath surface of a sheet. A suitable post preferably would be configured suitably, or would be made of suitable material, so that it would not mark the lower surface, particularly upon relative movement between the sheet and the post, although for some mouldings, superficial marking may be acceptable, while certain plastic sheets will have sufficient resistance to scratching or marking so that this does not occur.

The supporting means must provide sufficient support to prevent the sheet from excessive sagging when heated. Although some sagging is acceptable and inevitable, excessive sagging can alter sheet thickness and later affect the quality of moulding.

An oven according to the invention preferably is substantially automated and in a preferred arrangement, loading and unloading of sheets from the oven is by a robotic arrangement, preferably a robotic arm that lifts and places by suction. In such an automated system, it can be critical that the sheet be accurately positioned on the drawer within the oven, so that it can be unloaded and correctly positioned for moulding. In this respect, if a sheet is misaligned within the oven, that may result in the sheet being loaded misaligned within the moulding machinery. To achieve proper positioning for a sheet within a chamber of an oven, the chamber can include alignment members against which a sheet can abut in a correct position. For a square or rectangular sheet, the alignment members may be arranged to abut a sheet in a region of a corner thereof along two perpendicular edges. The alignment members therefore may comprise a pair of elongate members which are arranged at right angles and which engage the sheet along adjacent and perpendicular edges. Alternatively, a plurality of posts may be provided again to abut perpendicular edges. Other arrangements may be employed and for example, optical sensors may be used to sense the position of a sheet and when the sheet is sensed to be correctly positioned, suction or clamping may be employed to maintain the sheet position. Clearly other suitable arrangements may alternatively be employed.

In the preferred arrangement the supporting means includes roller supports and alignment members are arranged for engagement with edges of the sheet. In this arrangement, the rollers of the roller supports can be oriented so that the sheet is directed for engagement with the alignment members. In one trial, it has been found that the angle of the axis about which the rollers rotate can be about 15° from a line extending in the direction of drawer movement into and out of a heating chamber so that the rollers face in a direction towards the alignment members and so that movement of a sheet over the rollers tends to be towards the alignment members and towards the position of desired sheet location. In this preferred arrangement, the sheet preferably is supported so that gravity causes it to move on the rollers in a direction towards the alignment members. Thus, the roller supports can support the sheet higher towards the rear of the sheet and lower towards the front, and higher towards one side of the sheet and lower towards the opposite side. Alternatively, to produce the same result, the drawer on which the sheet is supported may be angled and further, the chamber and the drawer may be likewise angled. Thus, the oven itself may be caused to lean in a direction towards one corner thereof, so tending to cause sheet movement toward alignment members.

To ensure that the sheet is correctly positioned prior to its removal from the drawer, the removal means may shift the sheet to a position of correct alignment prior to removal. If the sheet is already correctly aligned, then shifting movement may not be required. Suitable sensors may provide a signal to dictate whether shifting movement is required. If shifting movement is required, then the removal means may cause the shift by gripping the sheet, such as by suction, or by pushing the sheet, and when the sheet is shifted to the desired sheet location, the removal means can remove the sheet for transfer to the moulding machinery. If the removal means operates by suction, then it is preferred that the vacuum be released upon the sheet being shifted to the desired sheet location, and for the removal means to re-grip the sheet in the correct position prior to removal. By this arrangement, the removal means is properly positioned relative to the sheet when the sheet is removed for correctly positioning the sheet in the moulding machinery.

An oven according to the invention may include one heating arrangement for each chamber, or the heating arrangement may provide heated air for a plurality of chambers. The preferred heating means of the oven is fan forced convection air and for this the heating means can include electric elements over which air is blown, although other forms of heating means could be provided. Because of the preference for uniform sheet heating, it is preferred that heated air be discharged substantially evenly through each chamber and for this, the heated air may be channelled through the chamber within suitable conduits or about suitable baffles or both. It is important that where the heating is fan forced, that even pressure be developed over the upper and lower surfaces of the sheet, particularly to prevent the sheet from lifting off the support means. The conduit or baffle arrangement may ensure even pressure.

The preheating temperature to which a sheet is heated preferably is between 55°C and 110°C. In the preferred embodiment of the invention, the sheet is preheated to about 80°C.

An oven according to the invention preferably includes a temperature sensing arrangement to sense the temperature of a sheet being heated. A thermocouple may be employed for this purpose, for engagement with the surface of the sheet. Engagement of only one side of the sheet, i.e. either the upper or lower sheet surface is acceptable and for convenience, the lower surface is preferred as this enables the thermocouple to be mounted to the drawer facing the lower surface. Preferably the thermocouple is pivotably mounted to the drawer and biased away from the drawer and toward the lower surface of a sheet supported by the drawer, so that the thermocouple engages the lower surface when a sheet is loaded onto the drawer.

For a better understanding of the invention and to show how it may be performed, embodiments thereof will now be described, by way of non-limiting example only, with reference to the accompanying drawings.

Figure 1 is a perspective view of an oven according to one embodiment of the invention.

Figure 2 is a plan view of a drawer of the oven shown in Figure 1.

Figure 3 is a detailed view of one corner section of the drawer of Figure 2.

Figure 4 is an end view of the oven of Figure 1.

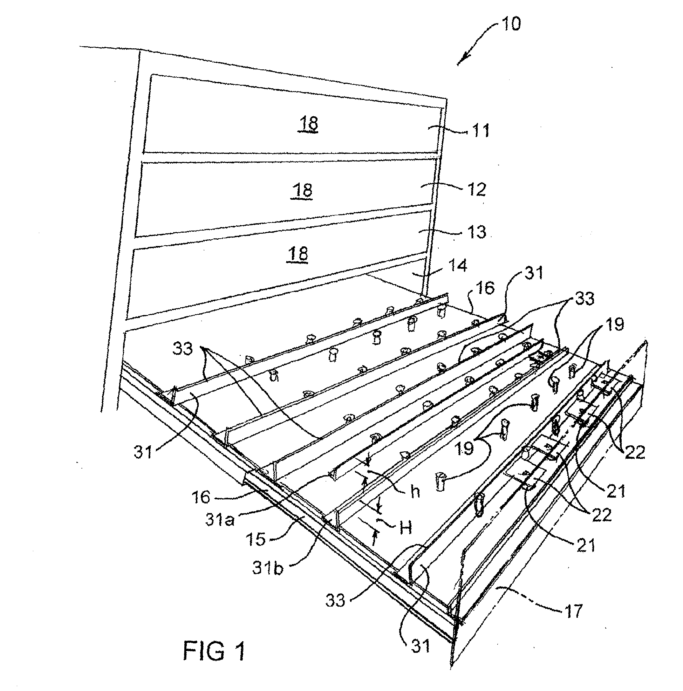

With reference to Figure 1, an oven 10 according to one embodiment of the present invention is illustrated. The oven 10 is shown in partial view only, but in the view shown, the oven 10 includes four separate heating chambers 11 to 14, with each of heating chambers 11 to 13 in a closed condition, while heating chamber 14 is open. The oven 10 could include further heating chambers extending below the chamber 14, or above the chamber 11 if further sheet heating capacity is required.

The heating chambers 11 to 14 define an interior space which is generally rectangular in cross section. Thus each chamber can accommodate a rectangular drawer and such a drawer 15 is shown in an extended position out of heating chamber 14.

The drawer 15 is mounted along opposite edges 16 thereof to a roller track which includes a plurality of rollers (not shown), for smooth movement of the drawer 15 between the extended position shown and a closed position in which it is fully accommodated within its respective heating chamber.

The drawer also includes a front wall 17 which is fixed to the front end of the drawer 15 and which shuts the heating chamber 14 when the drawer 15 is shifted from the extended position shown to a position in which it is fully accommodated within the heating chamber 14, i.e. to the same position as that shown in heating chambers 11 to 13. In those heating chambers, the front walls 18 of the drawers accommodated within those chambers, close the chambers.

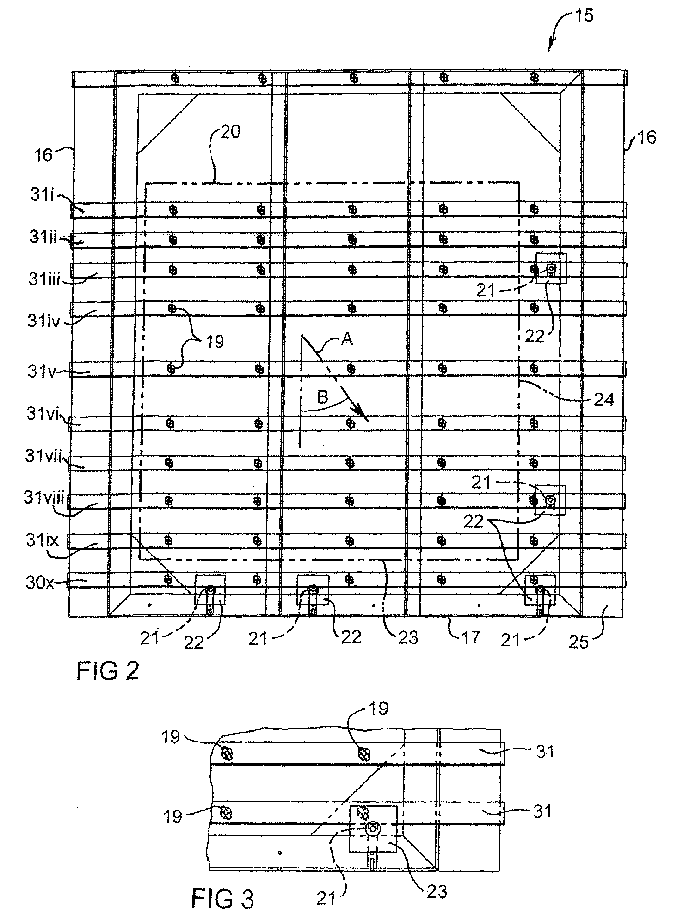

The drawer 15 is arranged to support a plastic sheet for preheating and for that support, a plurality of roller supports 19 extend upwardly from the drawer 15 and each of these comprises an upstanding support post and a roller fixed to the free end of that post. The roller supports 19 are shown in Figures 1 to 3 and reference will now be made to Figure 2.

In Figure 2, the drawer 15 of Figure 1 is shown in plan view and that view shows the layout of the roller supports 19. The roller supports 19 are spaced apart at a constant distance of 300 mm from each other across the drawer between the edges 16, while the spacing in the perpendicular direction varies from 100 mm spacing.

Figure 2 also shows in broken outline, a sheet 20 which is supported on top of the roller supports 19 and which in the particular embodiment shown, has edge dimensions of about 1 m each. The sheet can be any plastic material which is suitable for thermoforming such as high density polyethylene. The preheating temperature preferably is about 80°C.

In the position shown, the sheet 20 is spaced from alignment members 21, one of which is also shown in Figure 3. Each of the alignment members 21 is comprised of an upstanding post against which one edge of the sheet 20 can abut, and a plate 22 which is fixed to an upper end of the post and which resists lifting movement of the edge in abutment with the post.

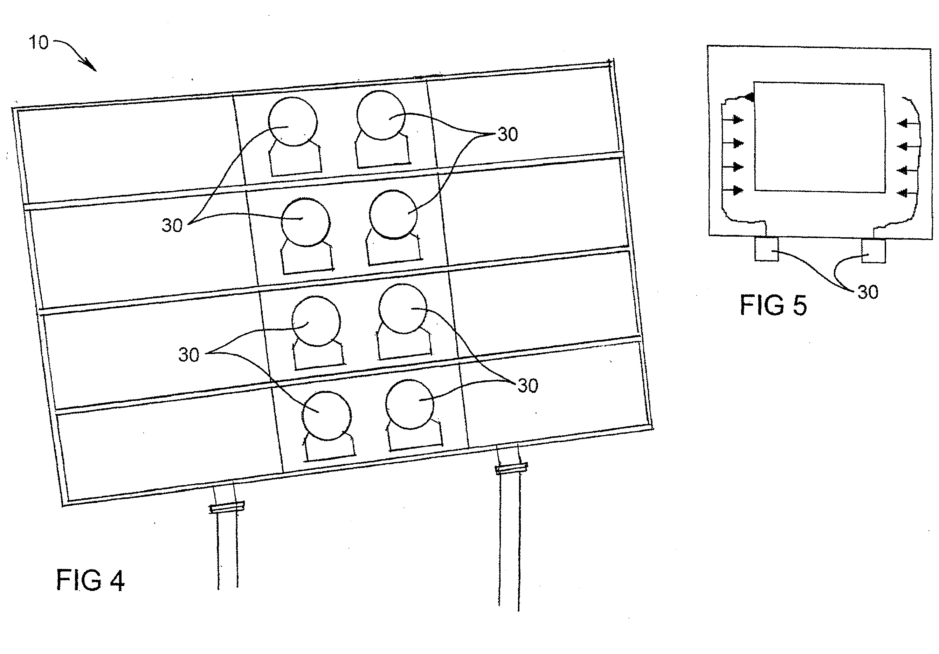

An arrow A shows the direction of alignment of the rollers of the roller supports 19. The angle β is 35°. The angle of the rollers of the roller supports 19 is conducive to shifting movement of sheet 20 toward a position in which each of the sheet edges 23 and 24 are engaged with the alignment members 21. Shifting movement can be promoted by inclining the drawer 15 so that the front corner 25 is at a lower point than each of the remaining drawer corners. With reference to Figure 4, which is a view of the rear end of the oven 10, it can be seen that the oven is mounted at an angle so that the heating chambers and likewise the drawers of those chambers are inclined. A forward inclination is also provided to cause drawer corner 25 (Figure 2) to have the lowermost position as discussed above.

Still referring to Figure 4, this shows in sketch form only, a view of the electric blowers 30 that are positioned on the rear of the oven 10 and these blowers direct air into each of the heating chambers 11 to 14. Figure 5 shows the passage of air from the blowers 30 about the sheet 20. It can be seen that air is directed along opposite edges of the sheet 20 and, as hereinafter described, the air is directed laterally across the sheet, over upper and lower surfaces thereof. By distributing heated air in this manner, the sheet can be evenly heated.

in order to achieve the desired air distribution the blowers 30 blow heated air through a manifold (not shown) at the rear of oven 10. The manifold directs air along the sides of the sheet 20 as shown in Figure 5. The air is directed across the sheet 20 by angle sections 31 shown in Figures 1 to 3. Figure 2 is an actual layout drawing of a drawer according to the invention and shows ten angle sections 31 (i) to 31 (x). The spacing of the angle sections 31 between the rear end 32 of the drawer 15 and the front wall 17 is the same as the rows of roller supports 19, so that the spacing varies. Where the spacing between the angle sections is smaller, the velocity of the air that travels between those sections is higher as is the heat absorption rate of the sheet 20 in that area. Conversely, where the spacing between the angle sections 31 is greater, the air velocity between those sections is lower and the heat absorption of the sheet 20 in that area is lower. See for example the smaller spacing between the angle sections 31(i) and 31 (ii) which is smaller compared to the spacing between the angle sections 31 (v) and 31 (vi). By this spacing, the heat distributed to various sections of the sheet can be controlled and the sheet can be heated evenly.

The length and height of the angle sections 31 can also vary and this relates to sheet support requirements. While the roller supports 19 support a sheet placed thereon, the upper edges 33 (Figure 1) of the angle sections 31 also supports a sheet against excessive warpage.

While Figure 1 shows that the length across the drawer 15 can vary (compare angle sections 31(a) and 31 (b), in Figure 2, the angle sections each have the same length. Thus, length of the angle sections can be the same, or they can vary to suit the size and material of the sheet being preheated.

The height of the angle sections can also vary depending on the extent of support required by the sheet being preheated. The angle section 31 (a) has a reduced height h compared to the height H of the angle section 31 (b).

While right angle sections 31 are shown in the drawings, the sections can be otherwise shaped and could for example, be C-shaped or be box shaped. A straight section could also be employed.

The oven 10 is operable, automatically, to extend a drawer for loading of a sheet to be preheated and to retract the drawer following loading. The drawer 15 would be retracted to the position of the drawers of the heating chambers 11 to 13. Preheating would then occur. The sheet size envisaged to be appropriate for use in the present invention is 600 to 1700 mm in length and width and 4 to 11 mm in thickness. In a sheet having a thickness of 9.8 mm, the time to heat from 20 to 80°C is 620 sec. While preheating takes place in the heating chamber 14, sheets can be loaded, preheated and removed from the other heating chambers 11 to 13. The number of heating chambers may be determined by the cycle time of the thermoforming process, or by the number of moulding machines the oven is required to supply. A sheet may remain within a heating chamber after it has reached the target preheating temperature, and it may remain there for some time. Thus, if the cycle time of a thermoforming process changes, it is not necessary to alter the cycle of the oven 10 for preheating.

In an automated process, the oven 10 will be controlled in concert with the rotobic arrangement for loading and unloading sheets and with the moulding machinery. Thus, the oven 10 can operate to automatically open a drawer 15 when a sheet 20 has been preheated and is required for a moulding operation. Any suitable drive mechanism can be employed to move a drawer 15 to an open position and a suitable chain or gear drive or a hydraulic or pneumatic ram arrangement may be employed for that purpose. Because each of the drawers 15 are to be opened for removal or loading of a sheet for preheating, it will be appreciated from the foregoing, that advantageously opening of one drawer does not affect the environment within another heating chamber.

The invention described herein is susceptible to variations, modifications and/or additions other than those specifically described and it is to be understood that the invention includes all such variations, modifications and/or additions which fall within the spirit and scope of the above description.

## Claims

1. An oven for preheating plastic sheet material prior to moulding, said oven including at least two separate heating chambers, each chamber including a drawer having supporting means for supporting a sheet and being movable into and out of said chamber, each chamber being associated with heating means for heating a sheet within the chamber, said drawer being movable into and out of said chamber for loading and unloading a sheet and said chamber being closed for heating a sheet and wherein the temperature within one of said chambers which is closed is substantially unaffected when the other of said chambers is opened.

2. An oven according to claim 1, wherein said supporting means is arranged to support a sheet to be preheated in an elevated position, so that heat can be directed to each of the broad faces of the sheet.

3. An oven according to claim 1 or 2, wherein said supporting means comprises a plurality of upstanding posts arranged to support a sheet on free ends of said posts.

4. An oven according to claim 1 or 2, wherein said supporting means comprises a plurality of roller supports including rollers on which a sheet to be preheated can be supported, said rollers permitting said sheet to shift relative to said roller supports.

5. An oven according to claim 4, wherein said roller supports comprise an upstanding post which supports an axle at a free end thereof and a roller is mounted on said axle to rotate about said axle.

6. An oven according to claim 4 or 5, wherein said rollers rotate about an axis which is disposed at an angle of about 35° to a line extending in the direction of drawer movement into and out of a said heating chamber.

7. An oven according to any one of claims 1 to 6, further comprising alignment members arranged to engage an edge of said sheet for sheet location.

8. An oven according to claim 7, wherein when said sheet is square or rectangular, said alignment members are arranged to engage two adjacent edges of said sheet which extend perpendicular to each other.

9. An oven according to claim 7 or 8, wherein said alignment members comprise at least one elongate member arranged to extend along an edge of said sheet.

10. An oven according to any one of claims 7 to 9, wherein said alignment members comprise at least one upstanding post arranged to engage an edge of said sheet.

11. An oven according to claim 10, wherein said post includes a plate which is disposed generally parallel to the plane of said drawer and which resists lifting of said sheet when an edge of said sheet is engaged against said post.

12. An oven according to any one of claims 7 to 11 when dependent on any one of claims 4 to 6, wherein said sheet is supported on an angle, so that said sheet tends to shift on said rollers towards said alignment members.

13. An oven according to claim 12, wherein said drawer is square or rectangular and is supported on an angle such that one corner of said drawer which is remote from said heating chamber when said drawer has been moved out of said heating chamber generally forms the lowest part of said drawer.

14. An oven according to claims 1 to 13, further including a temperature sensing arrangement to sense the temperature of a sheet being preheated.

15. An oven according to claim 14, wherein said temperature sensing arrangement includes a thermocouple arranged to engage a broad surface of the sheet.

16. An oven according to claim 15, wherein the thermocouple is mounted to said drawer and engages a lower surface of the sheet when the sheet is placed onto said drawer.

17. An oven according to any one of claims 1 to 16, wherein said heating means comprises heated air being blown into each chamber and being directed by a direction arrangement across upper and lower broad surfaces of a sheet to be preheated.

18. An oven according to claim 17, wherein said direction arrangement comprises a plurality of laterally extending members spaced between a rear end of said drawer and a front end, said members defining passages between them for passage of air laterally across the sheet to be preheated.

19. An oven according to claim 18, wherein the spacing between adjacent laterally extending members varies to alter the velocity of air travel between said members.

20. A method of preheating plastic sheet material in an oven which includes at least two separate heating chambers, each chamber including a drawer having supporting means for supporting a sheet and being movable into and out of said chamber, each chamber being associated with heating means for heating a sheet within the chamber, said drawer being movable into and out of said chamber for loading and unloading a sheet and said chamber being closed for heating a sheet and wherein the temperature within one of said chambers which is closed is substantially unaffected when the other of said chambers is opened, said method including the steps of:
(i) moving the drawer of a first of said heating chambers out of said first heating chamber;
(ii) placing a first sheet for support by said first drawer;
(iii) returning said first drawer into said first heating chamber and closing said first heating chamber;
(iv) heating said first sheet to a desired temperature;
(v) moving said first drawer out of said first heating chamber and removing said heated sheet from said first drawer;
(vi) moving the drawer of a second of said heating chambers out of said second heating chamber;
(vii) placing a second sheet for support by said second drawer;
(viii) returning said second drawer into said second heating chamber and closing said second heating chamber;
(ix) heating said second sheet to a desired temperature;
(x) moving said second drawer out of said second heating chamber and removing said heated sheet from said second drawer.

21. A method according to claim 20, wherein at least a third heating chamber is provided and said method includes the steps of:
(xi) moving the drawer of said third heating chamber out of said third heating chamber;
(xii) placing a third sheet for support by said third drawer;
(xiii) returning said third drawer into said third heating chamber and closing said third heating chamber;
(xiv) heating said third sheet to a desired temperature;
(xv) moving said third drawer out of said third heating chamber and removing said heated sheet from said third drawer.

22. A method according to claim 20 or 21, wherein steps (vi) to (viii) occur during step (iv).

23. A method according to any one of claims 20 to 121 wherein said sheet is selected from the following:
(a) **Amorphous Polymers**
Polystyrene, PMMA, PMMA/PVC Alloy, ABS, Polycarbonate, Rigid PVC, Modified PPO, Polysulfone, Polyethersulfone(PES), 20% GR PES, Polyamide-imide.
(b) **Crystalline Polymers**
LDPE, HDPE, EVA, Cellulose Acetate, Cellulose Butyrate, Cellulose Propionate, Polyptopylene Homo, Polypropylene Co, 40% GR PP, Polymethyl Pentene, PVDC, Acrylonitrile, PET, PBT neat, Nylone 6 - PA6, Nylong 66 - PA66, POM Copolymer, 30% CR POM, PTFE, FEP, PEEK.

24. A method according to any one of claims 20 to 23, wherein the desired temperature is between 55°C and 110°C.

25. A method according to claim 24, wherein the desired temperature is about 80°C.

26. A method according to any one of claims 20 to 25, wherein removal means are employed to remove a said sheet, said removal means including a robotic arm for lifting said sheet from said drawer.

27. A method according to claim 26, wherein prior to removing a said sheet, said removal means is operable to ensure said sheet is positioned relative to said drawer in a position that ensures that the sheet is properly fed to a moulding machine.

28. A method according to claim 27, wherein said removal means grips said sheet to position said sheet, then releases said sheet and then grips said sheet for sheet removal.

29. A method according to claim 27, wherein said removal means grips said sheet by suction.

30. A method according to any one of claims 27 to 29, wherein said removal means positions said sheet against alignment members which engage an edge of said sheet, whereby upon such engagement, said sheet is correctly positioned for removal.

31. A plastic sheet material preheated in an oven according to any one of claims 1 to 19.

32. A plastic sheet material preheated according to the method of any one of claims 20 to 30.
